# EUROPEAN PATENT SPECIFICATION

(11) **EP 3 160 222 B1**
(45) Date of publication and mention of the grant of the patent: **25.12.2019**
(21) Application number: 15730173.0
(22) Date of filing: 22.06.2015
(51) Int. Cl.: A01D 87/12, A01F 15/07

(54) **BALE WRAPPER WITH PICK-UP DEVICE**
BALLENWICKLER MIT AUFNAHMEVORRICHTUNG
ENRUBANNEUSE AVEC DISPOSITIF DE RAMASSAGE

(30) Priority: 26.06.2014 GB 201411395
(43) Date of publication of application: 03.05.2017
(73) Proprietor: Kuhn-Geldrop B.V., 5667 KP Geldrop (NL)
(72) Inventor: BRUIJN, Bart Jacobus Helena de, NL-6068 AT Neer (NL); VEEN, Coenraad Gerardus van der, NL-5665 JM Geldrop (NL)
(74) Representative: Raynor, Simon Mark
(86) International application number: PCT/EP2015/063896
(87) International publication number: WO 2015/197504

(56) References cited:
- EP-A1- 2 160 939
- WO-A1-2013/034268
- US-A1- 2002 090 281
- US-A1- 2010 299 029
- US-A1- 2014 003 889

## Description

The present invention relates to an agricultural apparatus that includes a pick-up device for picking up an agricultural bale from the ground. In particular but not exclusively the invention relates to a bale wrapper that includes such a pick-up device.

In certain embodiments, the invention incorporates a system for detecting and determining the shape, dimensions and position of an object to be picked up.

In an embodiment the present invention relates to an agricultural apparatus for picking up objects for further processing or storage on the apparatus, more specifically to an apparatus for applying stretch film to a bale.

An apparatus according to the invention may be either an independently operated machine that is towed by tractor or other vehicle, or it may be self-propelled machine.

It is well known to pick up agricultural objects such as agricultural bales from the ground, in order to process them or to store them for transport.

A bale can be either cylindrical (called a "circular" or "round" bale) or it can be a parallelepiped (called a "rectangular" or "square" bale). When the bale is to be wrapped, the bale is generally wrapped by rotating the bale around a horizontal axis while at the same time providing relative rotation about a vertical axis between the bale and a dispenser of the wrapping film. This produces a series of overlapping layers, which cover the entire outer surface of the bale to form an air and watertight enclosure. Generally, multiple layers of film are applied to increase the puncture-resistance of the wrapper and improve its airtight properties.

There are two main types of bale wrapper in common usage, which are illustrated in Figures 5 and 6 of US 5,327,706. Figure 5 of US 5,327,706 illustrates a satellite-type bale wrapper in which the bale is rotated about a horizontal axis while the film dispenser rotates about a vertical axis around the bale. Alternatively the satellite-type dispenser could be replaced by a ring with attached dispensers that rotate also around the bale. Figure 6 of US 5,327,706 illustrates a turntable-type bale wrapper apparatus in which the bale is located on a turntable that rotates about a vertical axis while at the same time rotating the bale about a horizontal axis, thereby applying film to the outer surface of the bale from a stationary film dispenser. The present invention is concerned especially but not exclusively with bale wrappers of the satellite-type, although certain aspects of the invention are also applicable to turntable-type bale wrappers or bale loading wagons.

An example of a bale loading device is given in WO2014003560. This device includes a sensor for sensing a bale and a controller for adjusting the position of the bale loading device based on signals from the sensor.

EP 2160939 A describes a bale wrapper that includes a bale support assembly having two roller assemblies for supporting and rotating a bale, and wherefrom, for example, the preamble of claim 1 is known.

A more specific bale wrapping machine of the satellite type is shown in GB 2275037. This machine includes two sets of rollers that may be driven/rotated in different ways to lift a bale from the ground, rotate the bale about a horizontal axis during wrapping, and then deposit the wrapped bale on the ground. The rollers are mounted on arms that are attached to a wheeled chassis. The arms can pivot to adjust the separation of the two sets of rollers in order to lift, support and deposit the bale.

Before lifting the bale into the wrapping position the bale wrapper apparatus is pulled/towed over the bale, so that the two roller sets are positioned on opposite sides of the bale. When the bale is lengthwise in its wrapping position and the bale is in the center of the satellite-type dispensing apparatus, the loading arms are moved towards the bale while turning the rollers to lift the bale upwards. Under pressure of the loading arms and the turning of the rollers the bale is lifted onto the rollers for wrapping. The positioning of the machine over the bale is dependent on the skills of the operator. If the machine is not stopped at the correct position the bale will be loaded too far to the front or the rear of the wrapper and consequently the bale will be wrapped incorrectly or the film to be wrapped around the bale may easily tear when coming into contact with the bale. Extra time will be required for re-attaching the film. This type of bale wrapper is able to wrap different sizes of square bales and round bales. However, the sizes and shapes have to be entered into the machine controller/computer by the operator in order to obtain the correct wrapping pattern appropriate to the shape and size of the bale to be wrapped. Wrong setting of the shape and size will lead to incorrect wrapping of the bale and possibly to deterioration of the wrapped bale material during storage.

It is known to use sensors to detect the presence of a bale on a bale pick-up (WO2013034268), but these sensors are not able to measure the dimensions and shape of the bales or adjust operation of the pick-up mechanism according to the size and shape of the bales.

A bale pick-up device can also potentially cause an accident if it is actuated when a person or animal is in the vicinity of the pick-up rollers.

It is an object of the present invention to provide an apparatus that mitigates at least some of the aforesaid disadvantages.

More specifically, preferred objects of the invention are to mitigate the problem of incorrect positioning of the bale wrapper over the bale before picking the bale up and/or to automatically recognize the size and/or shape of the bale to be wrapped/picked up, and/or to be able to prevent the wrapper from being started when an unknown shape or size is detected, to prevent accidents.

According to one aspect of the present invention there is provided a bale wrapper device that is configured to travel over the ground, the bale wrapper device including a pick-up device for picking up an agricultural bale from the ground, said pick-up device including a pick-up mechanism that is engageable with opposite sides of the bale and operable to lift the bale, and a wrapping system for wrapping a film wrapper around an agricultural bale that has been picked-up by the pick-up device, the pick-up device including a sensing system that is configured to sense the position and/or size of an object on the ground as the bale wrapper device travels towards the object, and a control unit that is configured to determine the position of the pick-up mechanism relative to the object based on signals received from the sensing system prior to picking-up the object, and to operate the pick-up mechanism when the pick-up mechanism is positioned correctly relative to the object.

The control unit senses the position of the object on the ground before it is picked up and automatically operates the pick-up device when it is positioned correctly to pick up the object from the ground. The pick-up device is thus able to pick-up a bale correctly and safely, without requiring a high level of skill from the operator.

Advantageously, the control unit is configured to determine the position of the pick-up mechanism relative to the object before the pick-up mechanism arrives at the correct pick-up position relative to the object, thus ensuring for example that the object is located centrally between the rollers.

Advantageously, the pick-up mechanism is configured to pick-up an object while the pick-up mechanism is moving relative to the object in the direction of travel.

Advantageously, the sensing system is configured to sense the length and/or height of an object. This allows it to determine when a bale is in the correct position to be picked up, and also how high the bale should be supported for the subsequent wrapping process.

Advantageously, the control unit is configured to halt operation of the pick-up mechanism without engaging the object if the sensed length and/or height of the object is outside predetermined limits, thus allowing the machine to pass by the object without touching it. Advantageously, the pick-up mechanism is capable of passing over an object without engaging the object. These features help to reduce the risk of accidents if a foreign object, for example an animal or a human being, is detected.

Advantageously, the pick-up mechanism includes at least two rotatable rollers that are rotatable to lift the object.

The control unit is preferably configured to operate the pick-up mechanism when the object is positioned centrally with respect to the length of the pick-up mechanism.

Advantageously, the sensing system includes at least one non-contact sensing device. Preferably, the non-contact sensing device is an optical sensing device, for example a laser-based distance measuring sensor. Advantageously, the optical sensing device is configured to emit a light beam and to sense light reflected by an object in the path of the beam. The optical sensing device is preferably configured to emit a light beam in a direction inclined to the vertical. The light beam preferably lies in a vertical plane that extends parallel to the direction of travel of the pick-up device over the ground.

Advantageously, the sensing system includes at least one sensing device for sensing the distance travelled by the bale wrapper device.

According to an embodiment of the invention there is provided a bale wrapper device for wrapping an agricultural bale, the bale wrapper device including a sensing system that is configured to sense the position and/or size of a bale, a pick-up mechanism engageable with opposite sides of the bale and operable to lift the bale, a wrapping system for wrapping a film wrapper around the bale and a control unit that is configured to position the pick-up mechanism relative to the bale based on signals received from the sensing device, prior to picking-up the bale.

Advantageously, the control unit is configured to control the position at which the pick-up mechanism engages the bale.

Advantageously, the sensing system is configured to sense the length and/or height of the bale.

Advantageously, the control unit is configured to halt operation of the pick-up mechanism if the sensed length and/or height of the bale is outside predetermined limits.

Advantageously, the pick-up mechanism includes at least two rotatable rollers that are rotatable to lift the object.

The control unit is preferably configured to position the bale centrally with respect to the length of the pick-up mechanism.

Advantageously, the sensing system includes at least one non-contact sensing device.

Advantageously, the non-contact sensing device is an optical sensing device.

Advantageously, the optical sensing device is configured to emit a light beam and to sense light reflected by a bale or other object in the path of the beam.

Advantageously, the optical sensing device is configured to emit a light beam in a direction inclined to the vertical. The light beam preferably lies in a vertical plane that extends parallel to a direction of movement of the pick-up device relative to the bale.

Advantageously, the sensing system includes at least one sensing device for sensing movement of the bale wrapper relative to the bale.

According to another aspect of the present invention there is provided a bale picking up apparatus incorporating a distance sensing device positioned above the object to be picked up and measuring a distance in a substantial vertical plane. The advantage of being positioned above the object is that there is substantially no risk of damage, and no risk of dirt interfering with the sensor. Further, when looking in a substantially vertical direction at an irregular shaped bale the sensing device will give a 'better' (more accurate) length measurement.

Preferably the distance sensing device is positioned before the position where the object is to be picked up; preferably at a position whereby the object has past the sensing position when being picked up, so as to be able to measure the length of the bale.

Preferably the sensing distance positioned at an angle pointing in the direction of the horizontal (e.g. at 45 degrees relative to the vertical). This enables the sensing device to sense whether the object is detected in a forward or rearward driving direction.

Advantageously the distance sensing device is a laser sensor but it could also be another sensing device operating on an acoustic or electromagnetic basis or on vision. Preferably the sensing device is contactless.

Preferably the length sensing device is connected to a controller, preferably including a computer for controlling the loading of the bale.

Preferably the controller is also connected to a second sensor for sensing the distance traveled by the apparatus or the speed of the apparatus. The latter measurements may be combined to determine length of the object and the distance to be traveled by the bale wrapper before the bale is to be picked up. On the basis of the values from the two sensors the controller (computer) can calculate the correct timing for picking up the bale. Because of this timing the bale can be picked up without stopping the bale wrapper. Correction for speed could be made in order to adjust the correct lifting position for different loading characteristics at different speeds. This information regarding the distance travelled can alternatively be provided by other means including, for example, from the tractor that is towing the machine.

Preferably, the moving of the rollers towards the bale by the loading arms is done in at least two phases. When the controller calculates that the object is just in-between the rollers but not in the correct position for lifting the loading arms are moved so far towards the bale that the rollers just slip by the sides of the bale. When the bale is in the correct position for lifting the rollers are rotated and the loading arms are pressed against the sides of the bale in order to lift the bale; preferably without stopping the forward movement of the bale wrapper apparatus.

When looking at the signal from the distance sensing device we see that a certain value is measured when not seeing any object at all (representing the distance to the ground). When the object comes into the beam the measured distance is reduced. These two values together with the angle of the beam will allow the control unit to determine the height of the object. The length of the object is determined by the distance (measured by the second sensor, or determined by the controller) the signal of the first sensor is more or less at the lower value.

Detecting if the machine is moving forward or moving backward can be determined by the transition between the distance values as the bale wrapper advances towards the bale.

An embodiment of the invention will now be described by way of example with reference to the accompanying drawings, in which:

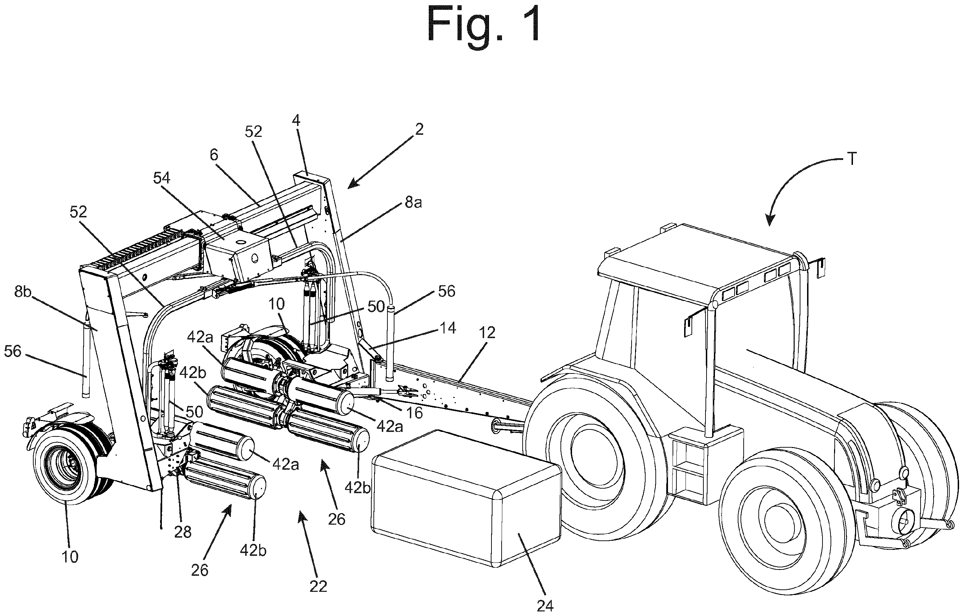

Figure 1 is a perspective view showing the front and right-hand side of a bale wrapper apparatus according to an embodiment of the invention, which is towed by a tractor;

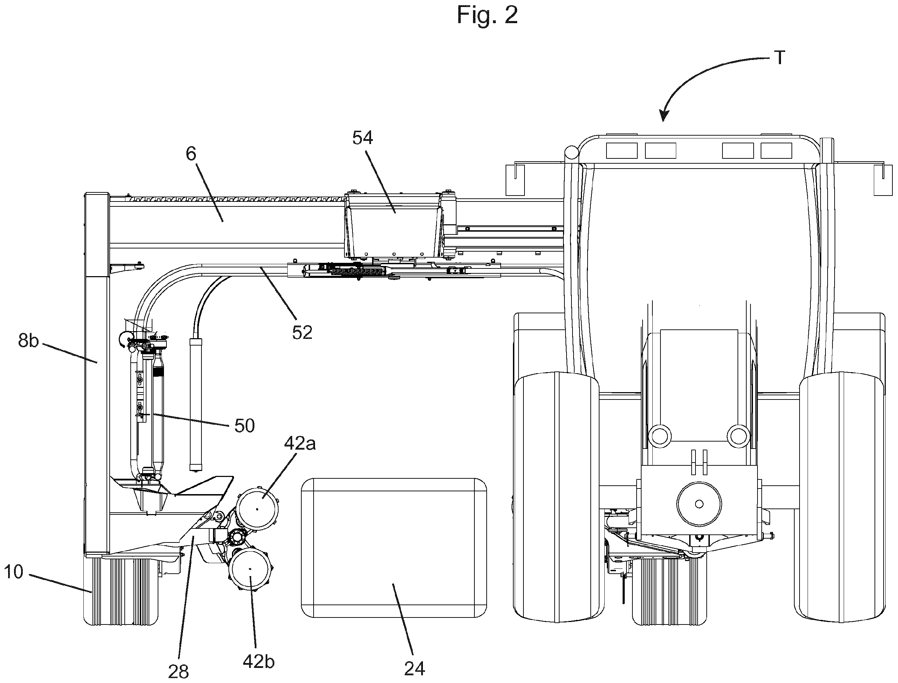

Figure 2 is a front elevation showing the bale wrapper apparatus and tractor of Fig. 1 from the front;

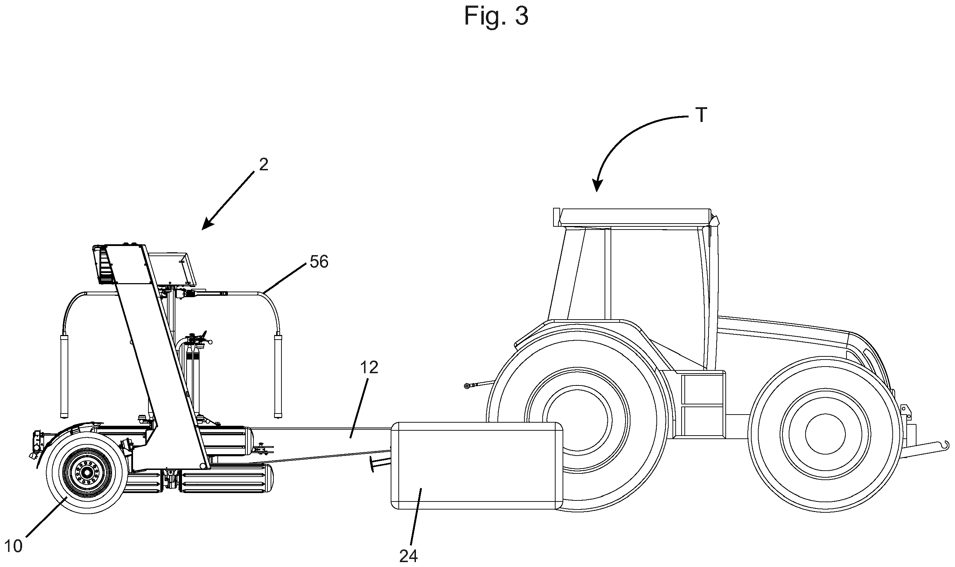

Figure 3 is a side elevation showing the bale wrapper apparatus and tractor of Fig. 1 from the right hand side;

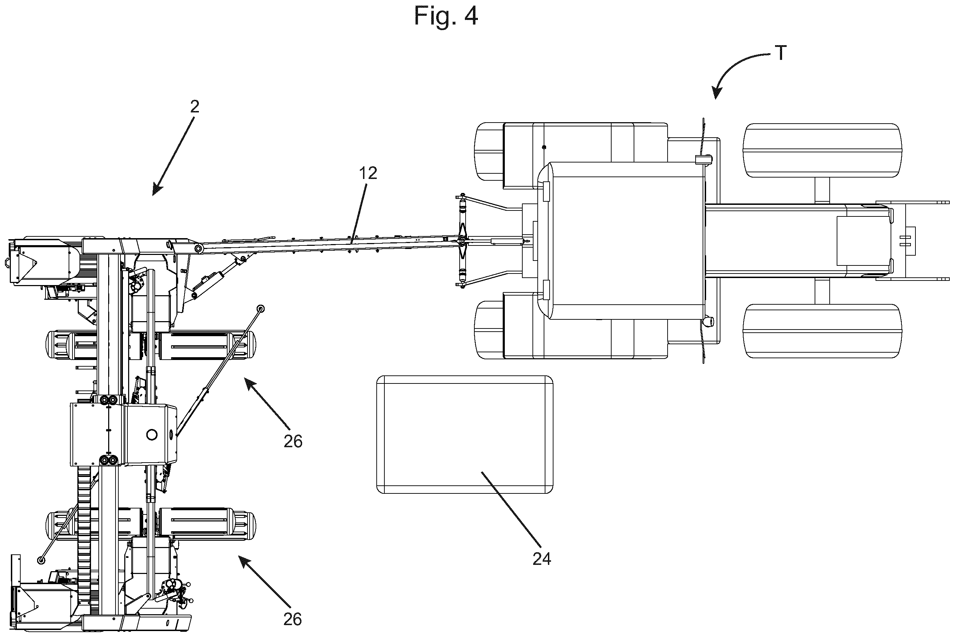

Figure 4 is a plan elevation showing the bale wrapper apparatus and tractor of Fig. 1 from above;
Figure 5 is a side elevation showing the bale wrapper apparatus and part of tractor of Fig. 1 from the right hand side;
Figure 6 illustrates an output signal from a sensing device associated with the pick-up device; and
Figure 7 is a schematic diagram illustrating certain components of a control system for the bale wrapper apparatus.

The bale wrapper apparatus, which is indicated generally by the reference number 2, includes an arch-shaped wheel frame 4 in the form of a portal having a cross-beam 6 and two side stanchions 8a, 8b, each of which is supported by a wheel 10. The cross-beam 6 is in two parts that are connected telescopically, allowing the width of the portal to be reduced for road transit. A tow bar12 is connected to the left-side stanchion 8a by a pivot 14. The angle of the tow bar 12 relative to the frame 4 can be adjusted by means of a hydraulic cylinder 16, so that the bale wrapper apparatus can be towed either directly behind a tractor T or displaced to one side thereof.

The bale wrapper apparatus 2 includes a bale pick-up and support assembly indicated generally by the reference number 22 for picking-up and supporting an agricultural bale 24. In this example a rectangular bale is shown. It will be understood however that the bale wrapper apparatus may also be used to wrap bales of different shapes. The bale pick-up and support assembly 22 includes a pair of roller assemblies 26, each of which is connected to one of the side stanchions 8a, 8b by a respective swing arm assembly 28. This swing arm assembly 28 allows the respective roller assembly 26 to be moved inwards and outwards substantially parallel to the ground (that is, substantially horizontally). Movement of the swing arm assembly 28 is controlled by a hydraulic actuator (not shown).

Each roller assembly 26 includes a pair of rotatable rollers, comprising an upper roller 42a and a lower roller 42b. Hydraulic drive motors (not shown) are provided for driving each pair of rollers independently in a clockwise or anti-clockwise direction.

The bale wrapper apparatus includes a pair of dispensers 50 for wrapping film. Each dispenser 50 is mounted on the end of a support arm 52 that is rotatably attached to a dispenser drive mechanism 54 mounted on the cross-beam 6. A safety device comprising a shut-off arm 56, which halts operation of the film dispenser if it encounters an obstacle, is associated with each support arm 52. The film dispensers 50 and the shut-off arms 56 are conventional and they will not therefore be described in detail.

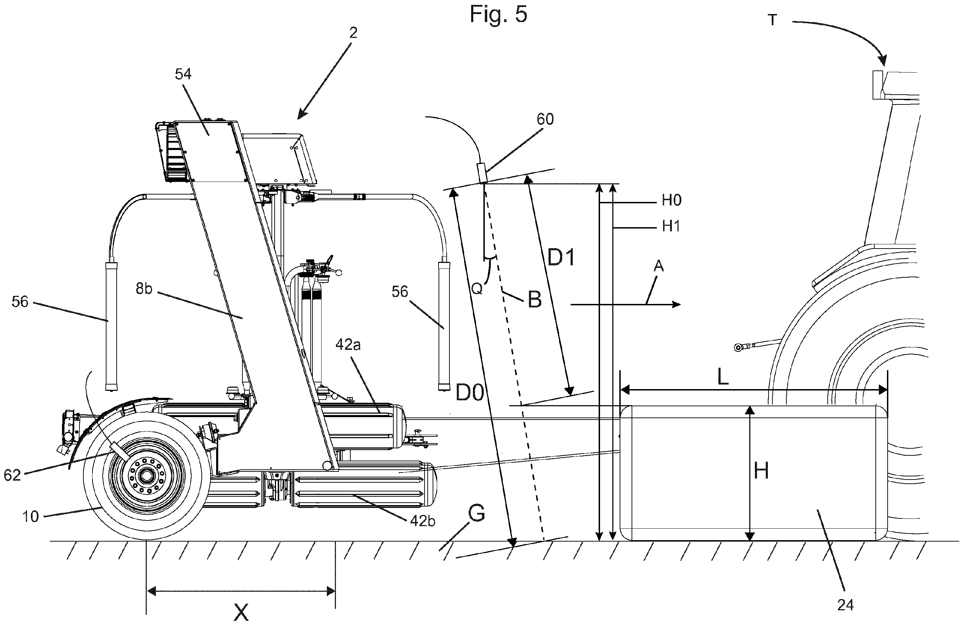

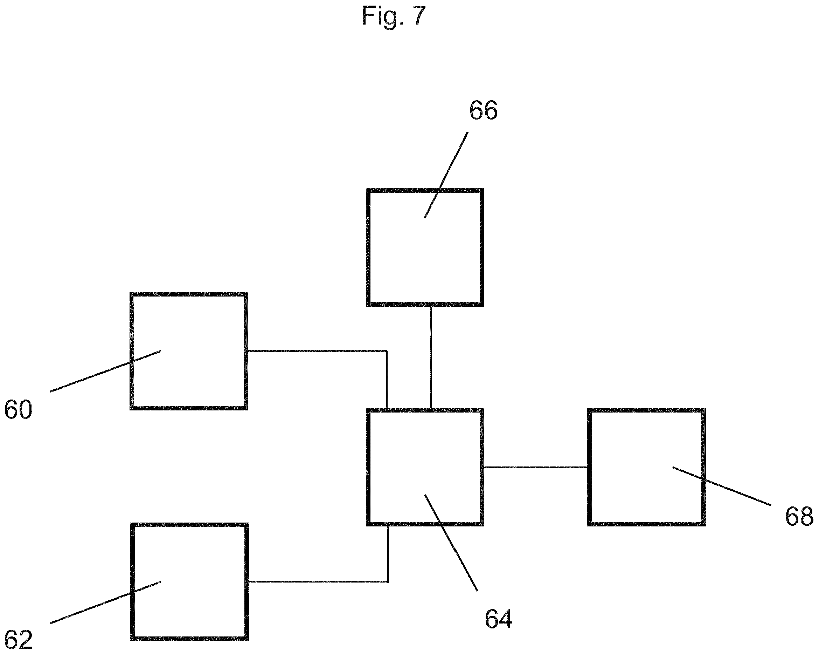

The bale wrapper includes a sensor device 60, shown in Fig. 5, for sensing the presence of a bale 24. The sensor device 60 is associated with a control unit 64 (Fig. 7) that controls operation of the bale pick-up and support assembly 22 when picking up a bale 24 from the ground.

In this case the sensor device 60 comprises an optical sensor, for example a laser sensor, which is mounted in front of the bale pick-up and support assembly 22 in the direction of forward travel A. The sensor device 60 may for example be carried by a support arm (not shown) that is attached to the cross-beam 6 of the wheel frame 4. The optical sensor 60 emits a pulsed beam of light B downwards towards the ground G and detects any light reflected back towards the sensor 60 from the ground G or from any object, such as a bale 24, that intercepts the beam B. The distance from the sensor 60 to the reflecting surface can then be determined from the time lapse between emitting a pulse of light and detecting the reflected light. Thus, as illustrated in Fig. 5, the sensor can measure the distance D0 to the ground or the distance D1 to the upper surface of the bale 24 when the bale intercepts the beam of light B.

Preferably, the sensor 60 is positioned to direct the light beam B downwards in a vertical plane that passes through the direction of forward travel A. The beam B is preferably angled forwards in this plane, so that it strikes the ground at a location in front of the sensor 60 in the direction of forward travel A. For example, the sensor 60 may be configured to direct the beam of light at an angle θ relative to the vertical direction, where the angle θ is in the range 0° to 60°, preferably 10° to 45°.

Providing that the angle θ is known, the height of the sensor above any reflecting surface can be calculated by simple trigonometry. For example, as illustrated in Fig. 5, the height H0 of the sensor 60 above the ground G will be: H0 = D0.cos θ and height H1 of the sensor 60 above the upper surface of the bale 24 will be: H1 = D1.cos θ. The height H of the bale is: H = H0 - H1.

The bale wrapper 2 preferably also includes a second sensor device 62, shown in Fig. 5, for sensing the distance X travelled by the bale wrapper 2. The second sensor device 62 is associated with the control system 64 that controls operation of the bale pick-up and support assembly 22 when picking up a bale 24 from the ground.

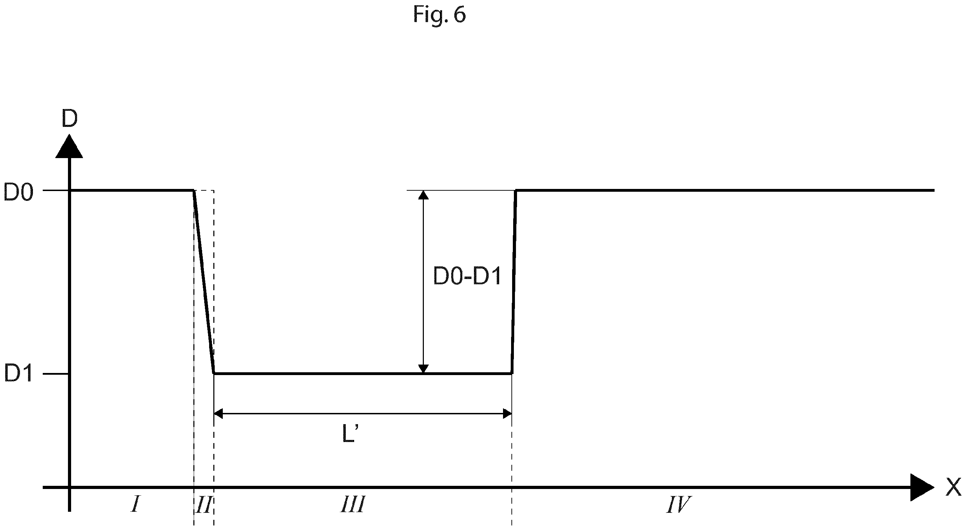

The second sensor device 62 may for example be associated with a wheel 10 of the bale wrapper and configured to sense rotation of the wheel, allowing the distance X travelled by the bale wrapper to be calculated. Alternatively, the second sensor 62 may sense movement of the bale wrapper by any other suitable means. The signals from the first sensor 60 and the second sensor 62 can be used to calculate the length L of the bale 24 as illustrated in Fig. 6.

Figure 6 depicts the distance D measured by the first sensor 60 as the bale wrapper 2 travels in the forward direction A towards and past a bale 24. Part I of the graph represents the period as the bale wrapper approaches the bale in the forward direction A and the sensor 60 senses the distance D0 to the surface of the ground G. In part II of the graph the distance measured by the sensor 60 decreases from D0 to D1 as the light beam B passes up the front face of the bale 24. In part III the sensor 60 senses the distance D1 to the upper surface of the bale and in part IV the sensor 60 again senses the distance D0 to the surface of the ground G, as the light beam B falls off the rear edge of the bale. The height H of the bale can be determined from the difference between two measured distances using the formula H = (D0 - D1).cos θ. The length L of the bale 24 is represented by the distance L' travelled by the bale wrapper during part III of the graph.

It may be noted that the graph of Fig. 6 is asymmetrical, as during part II the distance measurement decreases progressively from D0 to D1 as the light beam B passes up the front face of the bale 24, whereas at the transition between part III and part IV the distance measurement increases abruptly from D1 to D0 as the light beam B falls off the rear edge of the bale 24. This asymmetry can be utilized to sense whether the bale wrapper is moving forwards in the direction A, or reversing in the opposite direction. In the case of reverse movement the asymmetry will be reversed: that is, the distance measurement will decrease abruptly from D0 to D1 as the light beam B hits the rear edge of the bale 24, and subsequently it will increase progressively from D1 to D0 as the light beam B passes down the front face of the bale 24.

Figure 7 illustrates schematically a control circuit for the bale wrapper 2, which includes the first and second sensors 60, 62 and a control unit 64 that is connected to receive signals from the sensors. The control unit 64 is also optionally connected to receive control signals from an operator control interface 66, which is used by an operator to control operation of the bale wrapper. The control unit 64 is configured to send control signals to a drive system 68 that includes drive motors and actuators for driving the various components of the bale wrapper 2.

In order to wrap a bale 24, the bale wrapper apparatus 2 is first drawn up towards the bale so that the frame 4 straddles and then passes over the bale. The swing arm assemblies 28 are initially retracted outwards to allow the bale to pass between them. When the pick-up mechanism is in the correct position to pick-up the bale, the swing arm assemblies 28 are moved inwards so that the roller assemblies 26 engage the sides of the bale 24. At the same time the rollers 42a, 42b are rotated by the hydraulic motors so that the inner portion of each roller rotates upwards, thereby lifting the bale 24. As the bale is lifted the swing arm assemblies 28 are moved further inwards, so that the roller assemblies 26 then support the bale 24. These steps can all take place while the bale wrapper is being drawn forwards in the travel direction A, without it coming to a standstill.

Once the bale has been lifted to the supported position, wrapping film is dispensed by the dispensers 50 onto the surface of the bale 24. The rollers 42a, 42b are rotated in the same direction (clockwise or anti-clockwise), causing the bale 24 to rotate about a substantially horizontal axis. At the same time, the dispensers 50 rotate about the vertical axis of the dispenser drive mechanism 54, thereby applying a series of overlapping layers of film to the surface of the bale. This continues until the entire surface of the bale has been wrapped with one or more layers of film.

Once wrapping has been completed, the film is severed and the swing arm assemblies 28 are withdrawn outwards to deposit the wrapped bale on the ground. The process is then repeated with subsequent bales.

The control system comprising the sensors 60, 62 and the control unit 64 operates during the bale pick-up process to ensure that the bale 24 is picked-up correctly. The sensors 60, 62 measure the height and length of the bale 24 as the bale wrapper is approaching the bale, and the control system calculates the centre point of the bale and then operates the pick-up mechanism to pick-up the bale when the bale is positioned centrally between the ends of the rollers 42a, 42b. The control system can also control the height at which the bale 24 is supported during the wrapping process to ensure that it is wrapped efficiently, regardless of the height of the bale.

The control system can be programmed to halt operation of the pick-up mechanism if the height and length of the sensed object do not fall within predetermined limits, possibly indicating the presence of a foreign object, for example an animal or human being. The bale wrapper can then passes over the object without touching it, thus reducing the risk of an accident.

Various modifications of the invention are of course possible. For example, features of the invention can be applied to either a satellite-type bale wrapper as shown in the drawings, or to a turntable-type bale wrapper in which the bale is located on a turntable that rotates about a vertical axis while at the same time rotating the bale about a horizontal axis. The bale wrapper can also be arranged so that the bale rotates about a first axis and the dispenser rotates about a second axis that is substantially perpendicular to the first axis, where the first axis and the second axis are both substantially horizontal, or where one or both axes are inclined relative to the horizontal. The invention may also be embodied either in a dedicated bale wrapper apparatus or a combined baler and wrapper machine. It may also be used in other kinds of pick-up device, for picking up other kinds of objects in different situations.

## Claims

1. A bale wrapper device (2) that is configured to travel over the ground, the bale wrapper device including a pick-up device (22) for picking up an agricultural bale (24) from the ground, said pick-up device (22) including a pick-up mechanism (26) that is engageable with opposite sides of the bale and operable to lift the bale, and a wrapping system (50, 52, 54) for wrapping a film wrapper around an agricultural bale that has been picked-up by the pick-up device; **characterised in that** the pick-up device includes a sensing system (60, 62) that is configured to sense the position and/or size of an object on the ground as the bale wrapper device travels towards the object, and a control unit (64) that is configured to determine the position of the pick-up mechanism relative to the object based on signals received from the sensing system prior to picking-up the object, and to operate the pick-up mechanism (26) when the pick-up mechanism is positioned correctly relative to the object.

2. A bale wrapper device according to claim 1, wherein the control unit (64) is configured to determine the position of the pick-up mechanism (26) relative to the object before the pick-up mechanism arrives at the correct pick-up position relative to the object.

3. A bale wrapper device according to claim 1 or claim 2, wherein the pick-up mechanism (26) is configured to pick-up the object while the pick-up mechanism is moving relative to the object.

4. A bale wrapper device according to any one of the preceding claims, wherein the sensing system (60, 62) is configured to sense the length and/or height of the object.

5. A bale wrapper device according to claim 4, wherein the control unit (64) is configured to halt operation of the pick-up mechanism (26) without engaging the object if the sensed length and/or height of the object is outside predetermined limits.

6. A bale wrapper device according to claim 5, wherein the pick-up mechanism (26) is capable of passing over an object without engaging the object.

7. A bale wrapper device according to any one of the preceding claims, wherein the control unit (64) is configured to operate the pick-up mechanism (26) when the object is centrally positioned with respect to the length of the pick-up mechanism.

8. A bale wrapper device according to any one of the preceding claims, wherein the pick-up mechanism (26) includes at least two rotatable rollers (42a, 42b) that are rotatable to lift the object.

9. A bale wrapper device according to any one of the preceding claims, wherein the sensing system includes at least one non-contact sensing device (60).

10. A bale wrapper device according to claim 9, wherein the non-contact sensing device (60) is an optical sensing device.

11. A bale wrapper device according to claim 10, wherein the optical sensing device (60) is configured to emit a light beam and to sense light reflected by an object in the path of the beam.

12. A bale wrapper device according to claim 11, wherein the optical sensing device (60) is configured to emit a light beam in a direction having at least a vertical component, optionally inclined to the vertical at an angle of approximately 45°, and optionally inclined forwards in the direction of travel of the pick-up device relative to the object.

13. A bale wrapper device according to claim 12, wherein the light beam lies in a vertical plane that extends parallel to the direction of travel of the pick-up device.

14. A bale wrapper device according to any one of the preceding claims, wherein the sensing system includes at least one sensing device (62) for sensing the distance travelled by the bale wrapper device.

## Patentansprüche

1. Ballenwickelvorrichtung (2), die so gestaltet ist, dass sie sich über den Boden bewegt, wobei die Ballenwickelvorrichtung eine Aufnahmevorrichtung (22) zur Aufnahme eines landwirtschaftlichen Ballens (24) von dem Boden aufweist, wobei die Aufnahmevorrichtung (22) einen Aufnahmemechanismus (26) aufweist, der mit gegenüberliegenden Seiten des Ballens eingreifen kann und so funktionsfähig ist, dass er den Ballen anhebt, und mit einem Wickelsystem (50, 52, 54) zum Wickeln einer Folienhülle um einen landwirtschaftlichen Ballen, der durch die Aufnahmevorrichtung aufgenommen worden ist; **dadurch gekennzeichnet, dass** die Aufnahmevorrichtung ein Fühlersystem (60, 62) aufweist, das zum Messen der Position und/oder der Größe eines Objekts auf dem Boden gestaltet ist, wenn sich die Ballenwickelvorrichtung in Richtung des Objekts bewegt, und mit einer Steuereinheit (64), die so gestaltet ist, dass sie die Position des Aufnahmemechanismus im Verhältnis zu dem Objekt auf der Basis von Signalen bestimmt, die von dem Fühlersystem vor der Aufnahme des Objekts empfangen worden sind, und um den Aufnahmemechanismus (26) zu betätigen, wenn der Aufnahmemechanismus ordnungsgemäß im Verhältnis zu dem Objekt positioniert ist.

2. Ballenwickelvorrichtung nach Anspruch 1, wobei die Steuereinheit (64) so gestaltet ist, dass sie die Position des Aufnahmemechanismus (26) im Verhältnis zu dem Objekt bestimmt, bevor der Aufnahmemechanismus die ordnungsgemäße Position im Verhältnis zu dem Objekt erreicht.

3. Ballenwickelvorrichtung nach Anspruch 1 oder 2, wobei der Aufnahmemechanismus (26) so gestaltet ist, dass er das Objekt aufnimmt, während sich der Aufnahmemechanismus im Verhältnis zu dem Objekt bewegt.

4. Ballenwickelvorrichtung nach einem der vorstehenden Ansprüche, wobei das Fühlersystem (60, 62) so gestaltet ist, dass es die Länge und/oder die Höhe des Objekts misst.

5. Ballenwickelvorrichtung nach Anspruch 4, wobei die Steuereinheit (64) so gestaltet ist, dass sie den Betrieb des Aufnahmemechanismus (26) ohne Eingriff mit dem Objekt stoppt, wenn die gemessene Länge und/oder Höhe des Objekts außerhalb vorbestimmter Grenzwerte liegt bzw. liegen.

6. Ballenwickelvorrichtung nach Anspruch 5, wobei der Aufnahmemechanismus (26) über ein Objekt verlaufen kann, ohne mit dem Objekt einzugreifen.

7. Ballenwickelvorrichtung nach einem der vorstehenden Ansprüche, wobei die Steuereinheit (64) so gestaltet ist, dass sie den Aufnahmemechanismus (26) betätigt, wenn das Objekt im Verhältnis zu der Länge des Aufnahmemechanismus zentral positioniert ist.

8. Ballenwickelvorrichtung nach einem der vorstehenden Ansprüche, wobei der Aufnahmemechanismus (26) mindestens zwei drehbare Walzen (42a, 42b) aufweist, die zum Anheben des Objekts drehbar sind.

9. Ballenwickelvorrichtung nach einem der vorstehenden Ansprüche, wobei das Fühlersystem mindestens eine kontaktlose Fühlervorrichtung (60) aufweist.

10. Ballenwickelvorrichtung nach Anspruch 9, wobei die kontaktlose Fühlervorrichtung (60) eine optische Fühlervorrichtung ist.

11. Ballenwickelvorrichtung nach Anspruch 10, wobei die optische Fühlervorrichtung (60) zum Emittieren eines Lichtstrahls und zum Messen des von einem Objekt in dem Pfad des Strahls reflektierten Lichts gestaltet ist.

12. Ballenwickelvorrichtung nach Anspruch 11, wobei die optische Fühlervorrichtung (60) zum Emittieren eines Lichtstrahls in eine Richtung mit mindestens einer vertikalen Komponente gestaltet ist, optional mit einem Winkel von ungefähr 45° zur Vertikalen geneigt, und optional in Richtung der Bewegungsrichtung der Aufnahmevorrichtung im Verhältnis zu dem Objekt geneigt.

13. Ballenwickelvorrichtung nach Anspruch 12, wobei der Lichtstrahl in einer vertikalen Ebene liegt, die sich parallel zu der Bewegungsrichtung der Aufnahmevorrichtung erstreckt.

14. Ballenwickelvorrichtung nach einem der vorstehenden Ansprüche, wobei das Fühlersystem mindestens eine Fühlervorrichtung (62) zum Messen der durch die Ballenwickelvorrichtung zurückgelegten Strecke aufweist.

## Revendications

1. Dispositif d'enrubannage de balles (2) qui est conçu pour se déplacer sur le sol, le dispositif d'enrubannage de balles comprenant un dispositif de ramassage (22) pour ramasser une balle agricole (24) du sol, ledit dispositif de ramassage (22) comprenant un mécanisme de ramassage (26) qui peut venir en prise avec des côtés opposés de la balle et permet de soulever la balle, et un système d'enrubannage (50, 52, 54) pour enrubanner un enrubanneur à film autour d'une balle agricole qui a été ramassée par le dispositif de ramassage ; **caractérisé en ce que** le dispositif de ramassage comprend un système de détection (60, 62) qui est conçu pour détecter la position et/ou la taille d'un objet sur le sol lorsque le dispositif d'enrubannage de balles se déplace vers l'objet, et une unité de commande (64) qui est conçue pour déterminer la position du mécanisme de ramassage par rapport à l'objet sur la base des signaux reçus du système de détection avant de ramasser l'objet, et pour actionner le mécanisme de ramassage (26) lorsque le mécanisme de ramassage est correctement positionné par rapport à l'objet.

2. Dispositif d'enrubannage de balles selon la revendication 1, l'unité de commande (64) étant conçue pour déterminer la position du mécanisme de ramassage (26) par rapport à l'objet avant que le mécanisme de ramassage n'arrive à la position de ramassage correcte par rapport à l'objet.

3. Dispositif d'enrubannage de balles selon la revendication 1 ou 2, le mécanisme de ramassage (26) étant conçu pour ramasser l'objet lorsque le mécanisme de ramassage se déplace par rapport à l'objet.

4. Dispositif d'enrubannage de balles selon l'une quelconque des revendications précédentes, le système de détection (60, 62) étant conçu pour détecter la longueur et/ou la hauteur de l'objet.

5. Dispositif d'enrubannage de balles selon la revendication 4, l'unité de commande (64) étant conçue pour arrêter le fonctionnement du mécanisme de ramassage (26) sans venir en prise avec l'objet si la longueur et/ou la hauteur détectée de l'objet est hors des limites prédéfinies.

6. Dispositif d'enrubannage de balles selon la revendication 5, le mécanisme de ramassage (26) pouvant passer sur un objet sans venir en prise avec l'objet.

7. Dispositif d'enrubannage de balles selon l'une quelconque des revendications précédentes, l'unité de commande (64) étant conçue pour actionner le mécanisme de ramassage (26) lorsque l'objet est positionné au centre par rapport à la longueur du mécanisme de ramassage.

8. Dispositif d'enrubannage de balles selon l'une quelconque des revendications précédentes, le mécanisme de ramassage (26) comprenant au moins deux rouleaux rotatifs (42a, 42b) qui peuvent tourner pour soulever l'objet.

9. Dispositif d'enrubannage de balles selon l'une quelconque des revendications précédentes, le système de détection comprenant au moins un dispositif de détection sans contact (60).

10. Dispositif d'enrubannage de balles selon la revendication 9, le dispositif de détection sans contact (60) étant un dispositif de détection optique.

11. Dispositif d'enrubannage de balles selon la revendication 10, le dispositif de détection optique (60) étant conçu pour émettre un faisceau lumineux et pour détecter la lumière réfléchie par un objet sur le trajet du faisceau.

12. Dispositif d'enrubannage de balles selon la revendication 11, le dispositif de détection optique (60) étant conçu pour émettre un faisceau lumineux dans une direction ayant au moins une composante verticale, éventuellement inclinée par rapport à la verticale selon un angle d'environ 45°, et éventuellement inclinée vers l'avant dans la direction de déplacement du dispositif de ramassage par rapport à l'objet.

13. Dispositif d'enrubannage de balles selon la revendication 12, le faisceau lumineux se trouvant dans un plan vertical qui s'étend parallèlement à la direction de déplacement du dispositif de ramassage.

14. Dispositif d'enrubannage de balles selon l'une quelconque des revendications précédentes, le système de détection comprenant au moins un dispositif de détection (62) pour détecter la distance parcourue par le dispositif d'enrubannage de balles.
